Europäisches Patentamt

European Patent Office

Office européen des brevets

(11) Numéro de publication: **0 409 110 A2**

# DEMANDE DE BREVET EUROPEEN

(21) Numéro de dépôt: 90113495.7

(22) Date de dépôt: **14.07.90**

(51) Int. Cl.5: **G11B 23/38**, G11B 27/28,
G11B 27/34, G11B 33/10

(30) Priorité: **18.07.89 BE 8900782**

(43) Date de publication de la demande:
**23.01.91 Bulletin 91/04**

(84) Etats contractants désignés:
**BE CH DE DK FR GB IT LI**

(71) Demandeur: **Staar Development Company
-S.A.
479 Avenue Louise
B-1050 Bruxelles(BE)**

(72) Inventeur: **Staar, Marcel
479, avenue Louise
B-1050 Bruxelles(BE)**

(74) Mandataire: **Patentanwälte Dipl.-Ing. R.
Splanemann Dr. B. Reitzner Dipl.-Ing. K.
Baronetzky
Tal 13
D-8000 München 2(DE)**

(54) Système d'identification d'informations sur disques optiques.

(57) Système d'identification du contenu de disques d'informations optiques, caractérisé en ce que des moyens sont prévus pour détecter les informations graphiques portées par le disque (I) afin de pouvoir les restituer sur un écran de visualisation, et des moyens sont prévus pour pouvoir les garder en mémoire pour une identification ultérieure liée à des numéros d'ordre, des moyens sont prévus pour pouvoir visualiser uniquement ou complémentairement les informations graphiques et certaines informations incluses dans les enregistrements, des moyens sont prévus pour marquer d'une couleur caractéristique les enregistrements graphiques.

FIG.6

EP 0 409 110 A2

## SYSTEME D'IDENTIFICATION D'INFORMATIONS SUR DISQUES OPTIQUES.

En général, sur les disques portant des informations optiques tels que pour des reproductions sonores ou visuelles, les informations optiques sont accessibles sur l'une des faces du disque, et l'autre face porte des graphismes identifiant les différents enregistrements.

Pour permettre aux appareils de reproduction d'accéder avec précision aux différentes plages des enregistrements, ces disques contiennent déjà des informations digitales, propres à chaque disques, et qui se rapportent au temps exact de chaque plage d'enregistrement afin de pouvoir délimiter automatiquement le début et la fin des plages choisies.

Lorsque le disque est placé dans son appareil de reproduction ou dans un magasin pouvant contenir plusieurs disques comme dans des changeurs automatiques, on ne peut plus par la suite consulter visuellement les titres imprimés sur les disques et il faut, soit se référer aux boîtes d'emballage ou aux dépliants accompagnant en général chaque disque et qui reprennent la liste des mêmes titres en rapport avec leur numéro d'ordre, soit réaliser des étiquettes ou des listes séparées, ou par exemple encore, introduire au moyen d'un clavier alpha-numérique la liste des titres de chaque disque et les garder en mémoire ou les visualiser sur un écran quelconque de façon classique bien connue comme par exemple sur un petit ordinateur personnel.

Ces méthodes sont fastidieuses, compliquées et certaines requièrent même des connaissances techniques non souhaîtées pour une utilisation facile, rapide et agréable.

Le but de la présente invention est de proposer un système permettant de pouvoir collecter facilement les informations graphiques se trouvant sur un disque pour être consultées directement et en permanence sur un écran de visualisation, ou de les garder en mémoire pour être consultées ultérieurement pour l'emploi d'appareils automatiques de reproduction de disques multiples.

Un autre but est de proposer une visualisation simultanée, complémentaire d'autres informations contenues dans les enregistrements digitaux portés par le disque optique.

Un autre but est de proposer des moyens pour pouvoir visualiser le contenu des disques individuellement, ou par groupes.

Un autre but est de proposer de marquer le contenu de chaque disque par une teinte ou une trame caractéristique par catégorie d'appartenance, pour un repérage visuel plus rapide ou pour une visualisation du contenu des disques rassemblés par groupes d'appartenance.

Pour réaliser ces buts, on propose essentiellement de balayer la surface du disque portant les incriptions graphiques de façon à pouvoir les collecter et les reproduire directement sur un écran de visualisation ou les garder en mémoire pour être consultés ultérieurement.

On propose de balayer la surface d'informations graphiques par un capteur de transfert de charges (CCD) en forme de barrette.

On propose de monter le capteur directement sur l'appareil de lecture des informations optiques, ou de façon solidaire de celui-ci.

On propose de réaliser un écran de visualisation pour reproduire seulement les informations graphiques captées du disque ou en combinaison avec d'autres informations complémentaires contenues dans les informations digitales enregistrées sur le disques.

On propose de visualiser les titres des disques par groupes ou individuellement.

On propose de marquer d'une couleur ou d'une trame caractéristique les informations individuelles par groupes d'appartenance.

Afin de bien faire comprendre l'invention, on décrira ci-après des exemples non limitatifs.

Dans la FIG. I, on a représenté en I un disque portant sur la face 2 des informations optiques digitales, et sur la face 3, des graphismes imprimés 4 indiquant les différents enregistrements en rapport avec un numéro d'ordre.

Pour capter les graphismes imprimés sur le disque, on peut par exemple balayer cette surface avec un capteur à transfert de charges (CCD) qui permet de convertir une image optique en une sortie électronique.

Ici, la cellule de détection forme une réglette de la largeur de la surface à explorer et est composée d'une certaine quantité d'éléments photosensibles disposés en ligne et qui convertissent et accumulent les illuminations incidentes ponctuelles en charges électriques proportionnelles.

Des condensateurs (MOS transistors à effet de champ) sont associés à chaque élément photosensible, et les charges électriques individuelles peuvent être transferrées le long des condensateurs vers une sortie de lecture suivant un rythme régit par des horloges suivant les besoins.

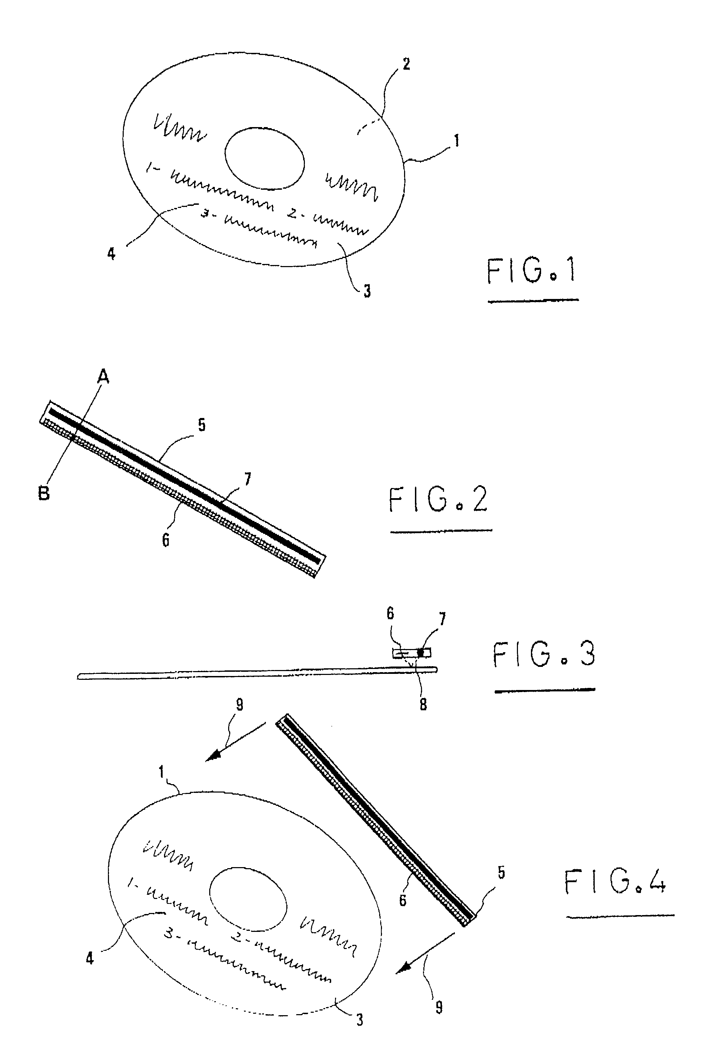

Le capteur destiné à récolter les informations graphiques peut donc, par exemple, être réalisé par une barrette 5 composée d'une série d'éléments à transfert de charges (CCD) en ligne 6, et d'un élément d'éclairage allongé, par exemple une diode à lumière 7, FIG. 2.

Une coupe A-B de la FIG. 2 montre dans la FIG. 3 comment la lumière émise par la diode à lumière 7 éclaire la surface de lecture 3 du disque I par un faisceau 8 qui, modulé par les informations optiques qu'il rencontre, vient frapper les éléments de transfert de charges 6 en proportion de la quantité de lumière réfléchie reçue.

La barrette représentée dans la FIG. 4 a une lon gueur d'environ la largeur totale de la surface des informations à détecter de façon à pouvoir réaliser en un seul mouvement de translation dans le sens des flèches 9, la récolte de toutes les informations graphiques 4 portées par le disque I, par lignes successives dont le rythme d'avancement est lié en rapport avec le rythme de lecture des éléments CCD afin de pouvoir reconstituer de façon cohérente toutes les informations dans l'ordre voulu pour une visualisation ou une mémorisation reconstruite exactement.

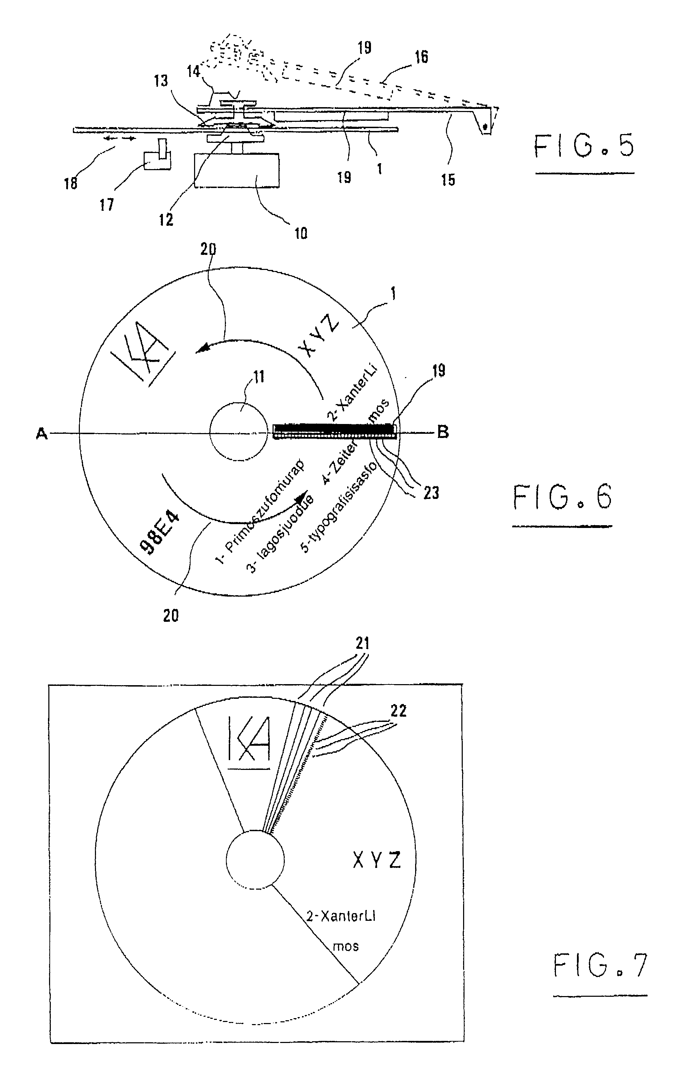

La FIG. 5 est une coupe A-B de la FIG. 6 et dans lesquelles on a représenté le disque I entraîné en rotation par un moteur I0.

Le trou II vient positionner le disque I sur un noyau I2 solidaire du moteur I0, et de disque est maintenu par un plateau I3 sous la pression d'un ressort I4.

Le plateau I3 est guidé par une pièce pivotante I5 pouvant prendre la position ouverte I6 pour permettre le changement d'un disque .

Une tête de lecture laser I7 balaye dans le sens des flèches I8 la face 2 du disque pour lire les informations optiques digitales qu'il porte.

On propose de monter sur le parcours et à proximité de la face 3 du disque, une barrette de lecture CCD I9 d'une longeur d'environ la largeur de la bande circulaire formant les graphismes 4 sur le disque I, et employer ainsi la rotation du disque dans le sens des flèches 20, pour obtenir un mouvement de translation gratuit et connu.

Le rythme de lecture ponctuelle d'informations graphiques se trouvant sur le parcours des éléments CCD formera une série régulière successive de lectures en rayon qui pourra balayer en un tour complet du disque par rapport au capteur CCD I9, la totalité des graphismes portés par la face 3 du disque.

Les graphismes imprimés sur la face 3 du disque I lus ponctuellement en lignes successives par une barrette 5, pourront être reconstituées sur un écran de visualisation d'une façon classique, par exemple un écran de cristaux liquides plat, monté sur l'appareil de reproduction ou sur une commande à distance, ou encore, sur l'écran d'un appareil de télévision à faisceau de balayage électronique disponible déjà par exemple dans un système centralisé.

Donc, dans les exemples donnés, les graphismes balayés longitudinalement par un lecteur CCD 5, ou balayés en rayon par un lecteur CCD I9, sont collectés totalement, mais suivant des découpages et des rythmes différents.

Il faudra donc adapter par une interface spécifique l'ordre et les rythmes des informations collectées avec l'ordre et les rythmes de balayage du type d'écran choisi.

La FIG. 7 donne un exemple d'un écran de cristaux liquides composé de 360 rayons 2I composé chacun de 200 plages 22.

Si le lecteur CCD I9 de la FIG. 6 est composé aussi d'une série de 200 plages 23, il suffira par exemple de choisir le même rythme pour la lecture que celui de l'écran de visualisation, par exemple 360 lectures sur un tour en I seconde.

A chaque $360^e$ de seconde on aura donc une lecture multiple et la reproduction sur l'écran de visualisation d'une suite d'informations ponctuelles pour un rayon donné.

Les lectures successives reconstitueront au fur et à mesure du défilement du disque par rapport au capteur CCD, la totalité des graphismes.

Si les graphismes récoltés ponctuellement en rayons sont destinés à être visualisés sur un écran, par exemple de télévision à balayage horizontal, une interface spécifique devra transformer les découpages afin que chaque information soit réadressée en conséquence.

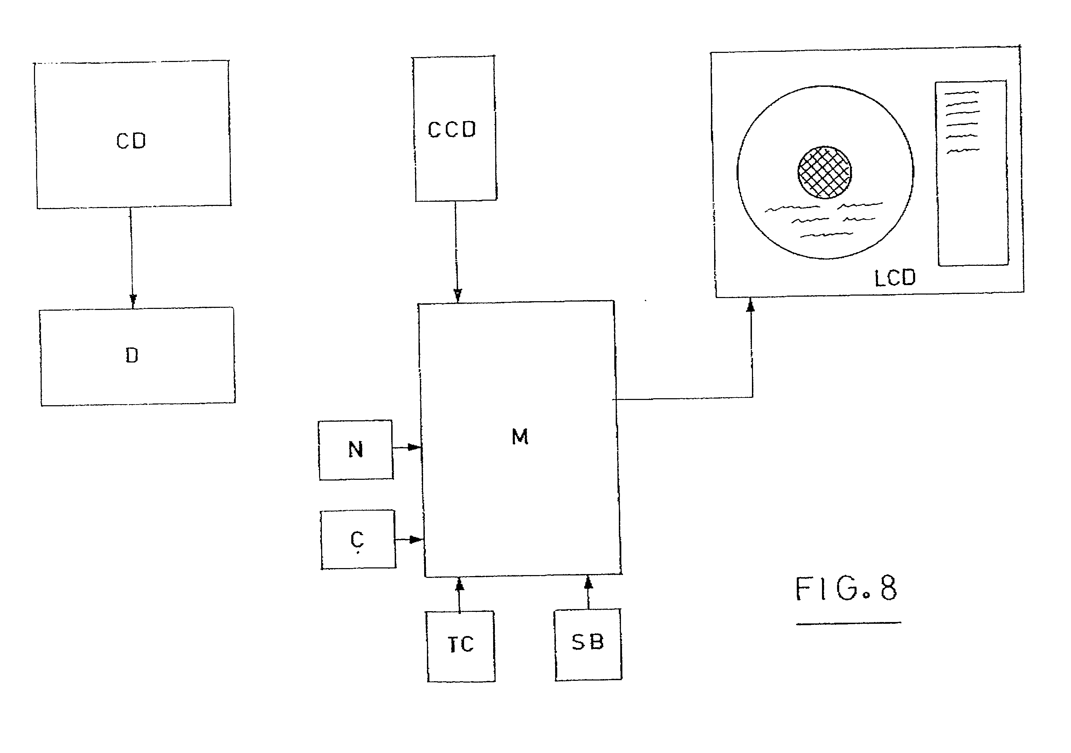

La FIG. 8 donne un exemple de schéma explicatif en blocs du système dans un ensemble.

On a représenté en CD un lecteur laser d'informations digitales sur disque optique et le bloc CCD représente un capteur d'informations graphiques, lesquelles informations sont envoyées vers un bloc mémoire M.

Les informations optiques digitales du disque sont décodées par le bloc D, et la partie des informations concernant la durée de chaque enregistrement est envoyée aussi vers le bloc M.

Un bloc N est destiné à associer un numéro d'ordre à un disque et le bloc C est destiné à associer une couleur à un disque d'après un groupe d'appartenance.

Un écran de visualisation LCD peut recevoir les informations de la mémoire M au travers du bloc SB destiné à mettre en forme et à synchroniser les informations en rapport avec les caractéristiques requises par l'écran de visualisation qui sera employé.

Le bloc TC est destiné à analyser et traîter l'ensemble des informations concernant les graphismes afin de rendre le texte le plus lisible possible et supprimer ou corriger les imperfections ou les graphismes inutiles, déterminer aussi le début et la fin de la lecture des graphismes sur le disque et l'opportunité de redresser ou inverser certains parties des graphismes d'après la façon dont ils ont été collectés.

Ce traîtement des informations peut être aussi complexe que nécessaire, par exemple pour déterminer dans l'ensemble des informations, seulement les textes qui suivent un numéro d'ordre et qui représentent donc que les titres, ainsi il ne faudra garder en mémoire que les informations utiles lesquelles pourront être visualisées éventuellement dans d'autre dispositions que l'original, par exemple sur un écran de dimensions plus étroites et plus allongées.

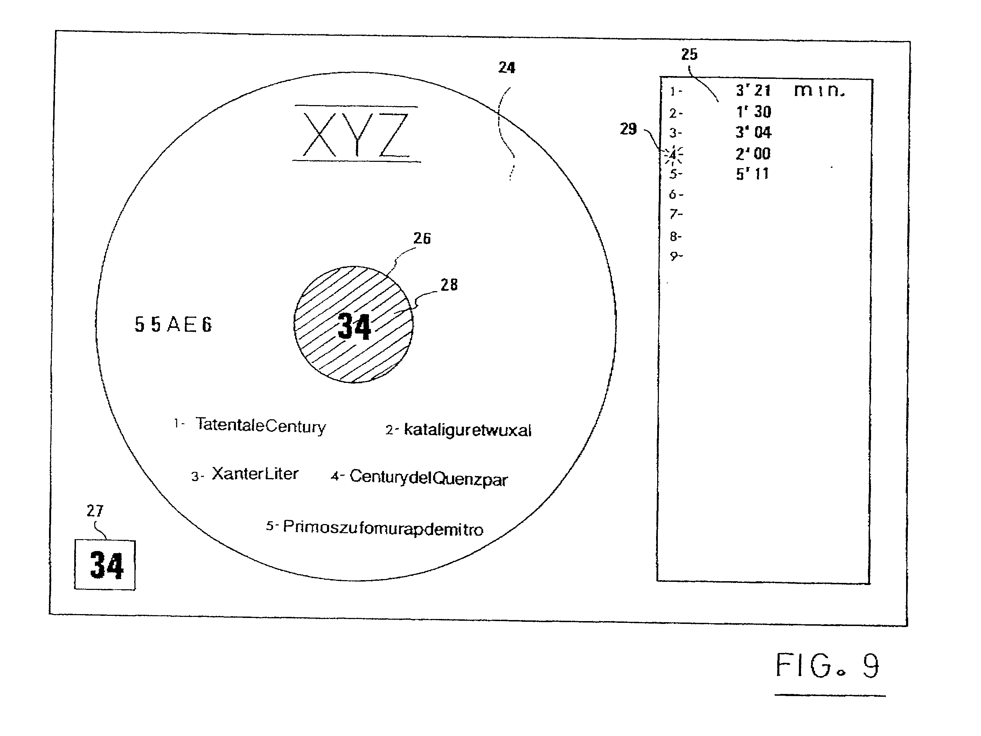

La FIG. 9 donne une disposition des informations sur un écran de visualisation.

On pourra par exemple visualiser une une reproduction des informations graphiques 24 seulement, ou en même temps, des informations complémentaires 25 et concernant ici la durée des enregistrements.

Un numéro d'identification peut être situé par exemple dans le centre 26 du disque ou dans une fenêtre 27.

Une couleur ou une trame 28 permet d'identifier rapidement le groupe ou la catégorie dans lesquels ce disque est classé.

On peut par exemple aussi indiquer l'enregistrement en cours de reproduction par un clignotement de son numéro.

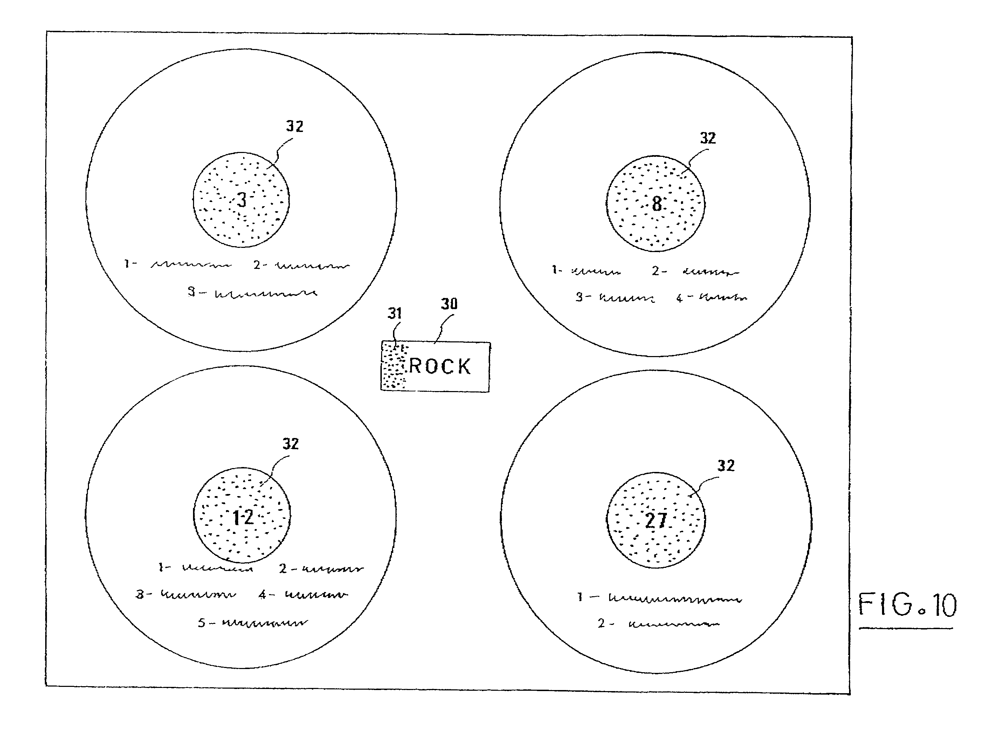

La FIG. 10 donne un exemple de visualisation de plusieurs disques en même temps pour une première identification rapide, par ordre chronologique, ou par groupe d'appartenance comme dans l'exemple donné.

On peut rappeler dans une fenêtre 30 le groupe d'appartenance choisi, et un rappel aussi de sa couleur ou de sa trame 31 d'identification et qui est reprise chaque fois par exemple dans le centre 32 du disque.

Lorsqu'on visualisera les disques par groupes suivant leur numéro d'ordre chronologique, ce marquage dans le centre du disque sera fort utile à l'utilisateur pour repérer rapidement le genre de disque qui l'intéresse.

Dans le cas où le système de lecture des graphismes sera utilisé dans un changeur destiné a manipuler une quantité importante de disques, la quantité d'informations correspondant aux graphismes sera donc aussi très importante et il pourra être avantageux d'employer un disque optique comme mémoire lequel peut porter économiquement une très grande quantité d'informations dans un très petit volume.

Dans certains cas, ces changeurs sont équipés de magasins de disques interchangeables lesquels sont prévus pour être accompagnés d'une mémoire électronique concernant les programmes qu'ils contiennent de façon à ce que, lorsque le magasin est placé dans le changeur, celui-ci peut être automatiquement informé de son contenu spécifique.

Dans certains cas, pour éviter que chaque magasin de disques optiques soit équipé d'une mémoire électronique relativement volumineuse et chère, les informations concernant les graphismes pourront donc être enregistrées sur un disque optique supplémentaire accompagnant le magasin mobile lui-même.

Si le changeur est normalement équipé d'un appareil d'enregistrement/reproduction, on pourra réaliser le disque mémoire dans le changeur même, ou, si le changeur est équipé d'un appareil de lecture seulement, les informations pourront être enregistrées préalablement sur un appareil d'enregistrement séparé quelconque.

Lorsqu'on placera un nouveau magasin dans le changeur, il suffira donc de lire d'abord, une seule fois, les informations du disque mémoire et les garder dans une mémoire électronique prévue dans le changeur, permettant ainsi de manipuler toutes les informations concernant un magasin spécifique aussi longtemps qu'il restera accouplé au changeur.

Dans certains cas aussi, lorsque le changeur n'est pas équipé d'une capacité de mémoire propre suffisante pour recevoir toutes les informations, on peut prévoir un appareil de reproduction ou un appareil d'enregistrement et/ou de lecture sur disque optique, pour cette fonction specifique, placé dans le changeur même, ne nécessitant pas alors une mémoire électronique intermédiaire.

## Revendications

1 - Système d'identification du contenu de disques d'informations optiques, caractérisé en ce que des moyens snt prévus pour détecter les informations graphiques portées par le disque afin de pouvoir les restituer sur un écran de visualisation, et des moyens sont prévus pour pouvoir les garder en mémoire pour une identification ultérieure liée à des numéros d'ordre, des moyens sont prévus pour pouvoir visualiser uniquement ou complémentairement les informations graphiques et certaines informations incluses déjà dans les informations digitales contenues dans les enregistrements du disque optique, des moyens sont prévus pour visualiser les identifications, lorsqu'elles sont multiples, à des rythmes différents par groupes ou une par une, des moyens sont prévus pour marquer d'une couleur ou d'une trame caractéristiques des informations individuelles par groupes d'appartenance.

2 - Suivant la revendication 1, caractérisé en ce que les moyens prévus pour pouvoir détecter les informations graphiques portées par le disque soient réalisés par un balayage horizontal de la surface portant les informations graphiques par un mouvement de translation des graphismes par rapport à un capteur d'informations optiques.

3 - Suivant la revendication 1, caractérisé en ce que les moyens prévus pour pouvoir détecter les informations graphiques portées par le disque soient réalisé par un balayage circulaire en rayon de la surface portant les informations graphiques par un mouvement de translation des graphismes par rapport à un capteur d'informations optiques.

4 - Suivant les revendications I à 3, caractérisé en ce que le capteur d'informations optiques soit monté solidairement sur l'appareil de reproduction des informations optiques digitales.

5 - Suivant les revendications I à 3, caractérisé en ce que le capteur d'informations optiques soit monté solidairement par rapport à la position de l'appareil de reproduc tion des informations optiques digitales.

6 - Suivant les revendications I à 5, caractérisé en ce que le capteur d'informations optiques soit réalisé par un reglette longitudinale d'éléments à transfert de charges (CCD).

7 - Suivant les revendications I à 6, caractérisé en ce que le capteur CCD soit monté perpendiculairement sur le parcours de défilement du rayon du disque.

8 - Suivant les revendications I à 7, caractérisé en ce que le mouvement de translation pour faire défiler la surface portant les graphismes par rapport au capteur CCD pour une lecture en rayon, soit réalisé par la rotation du disque déjà nécessaire pour la lecture des informations optiques digitales.

9 - Suivant les revendications I à 8, caractérisé en ce que les informations récoltées par le capteur CCD soient stockés dans une mémoire.

I0 - Suivant les revendications I à 9, caractérisé en ce que l'on associe à chaque série d'informations stockés dans la mémoire, un numéro d'ordre.

II - Suivant les revendications I à I0, caractérisé en ce que l'on associe à chaque série d'informations stockés dans la mémoire, une information concernant une couleur ou une trame pour la marquer suivant un groupe d'appartenance.

I2 - Suivant les revendications I à II, caractérisé en ce que les moyens prévus pour garder en mémoire les informations concernant les graphismes des disques soient réalisés par un disque optique dont les caractéristiques soient similaires aux disques optiques utilisés par l'appareil de reproduction et/ou d'enregistrements d'informations optiques digitales afin de pouvoir lire et/ ou écrire les informations du disque mémoire sur le même appareil de traîtement.

I3 - Suivant les revendications I à II, caractérisé en ce que les moyens prévus pour garder en mémoire les informations concernant les graphismes des disques, soient réalisés par un disque optique dont les informations peuvent être enregistrées et/ou lues par un appareil de traîtement supplémentaire placé solidairement ou non dans un appareil quelconque de disques multiples.

FIG.1

FIG.2

FIG.3

FIG.4

FIG.5

FIG.6

FIG.7

FIG.8

FIG. 9

FIG. 10

EP 0 409 110 A2